# EUROPÄISCHE PATENTSCHRIFT

(11) **EP 2 791 490 B1**
(45) Veröffentlichungstag und Bekanntmachung des Hinweises auf die Patenterteilung: **20.04.2016**
(21) Anmeldenummer: 12775241.8
(22) Anmeldetag: 18.10.2012
(51) Int. Cl.: F02D 19/06, F02D 19/08, F02M 21/02

(54) **KRAFTSTOFFSYSTEM**
FUEL SYSTEM
SYSTÈME DE CARBURANT

(30) Priorität: 16.12.2011 DE 102011088797
(43) Veröffentlichungstag der Anmeldung: 22.10.2014
(73) Patentinhaber: Robert Bosch GmbH, 70442 Stuttgart (DE)
(72) Erfinder: ARNDT, Stefan, 70569 Stuttgart (DE); FLO, Siamend, 70499 Stuttgart (DE); NITSCHE, Frank, 71686 Remseck am Neckar (DE); ALLGEIER, Thorsten, 74199 Untergruppenbach (DE); MAIER, Martin, 71696 Moeglingen (DE); GRZESZIK, Roman, 37127 Dransfeld (DE); BARBIER, Henry, Bangalore 560030 (IN); HERZIG, Andreas, 71229 Leonberg (DE); LANGER, Winfried, 75428 Illingen (DE); HOHL, Guenther, 70569 Stuttgart (DE); ARNOLD, Juergen, 71672 Marbach am Neckar (DE)
(86) Internationale Anmeldenummer: PCT/EP2012/070628
(87) Internationale Veröffentlichungsnummer: WO 2013/087264

(56) Entgegenhaltungen:
- WO-A1-2011/130791
- WO-A1-2012/138222
- DE-A1-102004 011 414
- DE-A1-102007 028 816
- DE-A1-102007 051 677
- GB-A- 2 407 620
- JP-A- 59 162 337
- US-A- 2 767 691

## Beschreibung

### Stand der Technik

Die Erfindung betrifft ein Kraftstoffsystem nach dem Oberbegriff des Anspruchs 1.

Vom Markt her bekannt sind Kraftstoffsysteme von Brennkraftmaschinen, welche Kraftstoff mittels eines Einspritzsystems in Brennräume der Brennkraftmaschine einspritzen. Dabei beeinflussen ein Kraftstoffdruck, eine Kraftstofftemperatur, eine Kraftstoffart und/oder konstruktive Eigenschaften des Einspritzsystems den technischen Wirkungsgrad der Brennkraftmaschine sowie die chemische Zusammensetzung des Abgases. Patentveröffentlichungen aus diesem Fachgebiet sind beispielsweise die DE 44 44 417 A1 und die DE 195 00 690 A1.

### Offenbarung der Erfindung

Das der Erfindung zugrunde liegende Problem wird durch ein Kraftstoffsystem nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung weist den Vorteil auf, dass bei einem vergleichbaren Kraftstoffdruck eine Tröpfchengröße eines in einen Brennraum einer Brennkraftmaschine eingespritzten Kraftstoff-Gemisches verkleinert werden kann, wodurch die Verbrennung und die Zusammensetzung des Abgases verbessert werden. Entsprechend kann bei einer vergleichbaren Tröpfchengröße ein Kraftstoffdruck des Kraftstoffsystems gesenkt werden, wodurch das Kraftstoffsystem insgesamt erheblich vereinfacht werden kann. Beispielsweise kann die Ausführung einer Hochdruck-Kraftstoffpumpe sowie von Kraftstoffleitungen, Sensoren und/oder Injektoren erheblich vereinfacht und somit verbilligt werden. Weiterhin tragen beide für die Einspritzung verwendeten Kraftstoffe zur Verbrennung bei, so dass die Energie des gesamten Gemisches zum Antrieb der Brennkraftmaschine genutzt und der Kraftstoffverbrauch vermindert werden kann. Ein besonderer Kostenvorteil ergibt sich für solche Kraftstoffsysteme und Brennkraftmaschinen, welche von vornherein für einen (umschaltbaren) Betrieb mit mehreren Kraftstoffarten, wie beispielsweise Benzin und Flüssiggas (LPG, engl. "liquefied petroleum/propane gas"), ausgeführt sind. Die Erfindung ist sowohl für eine direkte Einspritzung von Kraftstoff in einen Brennraum der Brennkraftmaschine als auch für eine Saugrohreinspritzung anwendbar. Ebenso ist die Erfindung für Ottomotoren und für Dieselmotoren anwendbar.

Das erfindungsgemäße Kraftstoffsystem weist einen ersten Speicher (Kraftstoffbehälter) für einen ersten in flüssiger Phase befindlichen Kraftstoff mit einem ersten Dampfdruck und einen zweiten Speicher für einen zweiten in flüssiger Phase befindlichen Kraftstoff mit einem zweiten Dampfdruck auf. Dabei ist der zweite Dampfdruck höher als der erste Dampfdruck. Weiterhin weist das Kraftstoffsystem eine Mischeinrichtung zum Mischen des ersten in flüssiger Phase befindlichen Kraftstoffs mit dem zweiten in flüssiger Phase befindlichen Kraftstoff auf. Die Mischeinrichtung ist mit einem stromabwärts angeordneten Injektor (Einspritzventil) hydraulisch verbunden, wobei der Injektor so ausgebildet ist, dass beim bzw. unmittelbar nach dem Durchtritt des Gemisches durch eine Austrittsöffnung des Injektors der zweite Kraftstoff von der flüssigen in die gasförmige Phase übergeht. Die beiden Kraftstoffe werden also miteinander gemischt und in flüssigem Zustand gemeinsam und somit gleichzeitig eingespritzt. Der Kraftstoffdruck ist dabei bis zu der Austrittsöffnung höher als der jeweilige Dampfdruck. Ein Stoffmengenverhältnis des ersten zu dem zweiten Kraftstoff beträgt beispielsweise zehn zu eins.

Durch den höheren Dampfdruck bzw. die niedrigere Siedetemperatur des zweiten Kraftstoffs in Bezug auf den ersten Kraftstoff entsteht beim bzw. unmittelbar nach dem Einspritzen der Effekt, dass der zweite Kraftstoff - als Folge des Druckabfalls - schlagartig in den gasförmigen Zustand übergeht (engl. "flash boiling"). Dabei nimmt das Volumen des zweiten Kraftstoffs ebenso schlagartig zu. Bei einer vorherigen guten Vermischung des ersten und des zweiten Kraftstoffs wird dabei der umgebende erste Kraftstoff sozusagen "auseinander gerissen", wobei sehr viele und besonders kleine Tröpfchen des ersten Kraftstoffs gebildet werden. Diese kleinen Kraftstofftröpfchen können besonders gut verdampfen. Dabei ist eine Verdampfungsgeschwindigkeit in etwa umgekehrt proportional zum Quadrat der Tröpfchendurchmesser, wodurch sich eine entsprechend schnelle und optimierte Gemischbildung in dem Brennraum ergibt.

Weiterhin kann die Erfindung auch bei einer Niederdruck-Saugrohreinspritzung, bei einem Diesel-Einspritzsystem oder bei Einspritzsystemen für eine Abgasnachbehandlung ("AdBlue") - beispielsweise in Verbindung mit Kohlendioxid (CO2) - angewendet werden. Ebenso kann die Erfindung für ein Düsensystem einer Ölheizung angewendet werden, beispielsweise für Gebäudeheizungen. Im Fall von Brennkraftmaschinen ist die Einspritzung ein jeweils vergleichsweise kurzer Vorgang, im Fall von Ölheizungen dagegen ein eher kontinuierlicher Vorgang. Der Begriff "Kraftstoff' ist also insoweit nicht einschränkend zu verstehen, sondern beinhaltet alle reagierenden Fluide, die zerstäubt werden und bei der Zerstäubung einen Druckabfall erfahren, wobei der Grund der Zerstäubung eine Vergrößerung der Reaktionsoberfläche und somit ein möglichst hoher Zerstäubungsgrad mit möglichst kleinen Tröpfchendurchmessern ist.

Insbesondere sieht die Erfindung vor, dass der erste Kraftstoff Benzinkraftstoff oder Dieselkraftstoff und der zweite Kraftstoff Flüssiggas oder Methan oder Ethan ist. Flüssiggas, Methan oder Ethan weisen einen in Bezug auf Benzinkraftstoff oder Dieselkraftstoff deutlich höheren Dampfdruck auf und sind somit in Bezug auf die Temperatur und den Druck im Brennraum zum Zeitpunkt der Einspritzung besonders geeignet, den Benzinkraftstoff oder den Dieselkraftstoff in feinsten Tröpfchen rasch zu verteilen. Allgemein bedeutet der Dampfdruck einen - temperaturabhängigen und stoffabhängigen - Umgebungsdruck, unterhalb dessen eine jeweilige Flüssigkeit anfängt, in die gasförmige Phase überzugehen.

Erfindungsgemäß ist vorgesehen, dass in einem Bereich des ersten bzw. zweiten Speichers jeweils eine erste bzw. zweite Kraftstoffpumpe angeordnet ist, und dass ein Druckbereich der ersten Kraftstoffpumpe mit einem Saugbereich einer ersten Hochdruck-Kraftstoffpumpe verbunden ist, und dass ein Druckbereich der zweiten Kraftstoffpumpe mit einem Saugbereich einer zweiten Hochdruck-Kraftstoffpumpe verbunden ist, und dass der Druckbereich der ersten Hochdruck-Kraftstoffpumpe und der Druckbereich der zweiten Hochdruck-Kraftstoffpumpe mit der Mischeinrichtung verbunden sind, und dass die Mischeinrichtung stromabwärts mit einem Druckspeicher verbunden ist, aus welchem das Gemisch dem Injektor zugeführt werden kann. Dabei werden die Kraftstoffe mittels einer jeweils eigenen (Vorförder-) Kraftstoffpumpe und einer nachfolgenden jeweils eigenen Hochdruck-Kraftstoffpumpe gefördert. Auf diese Weise können die unterschiedlichen Eigenschaften beider Kraftstoffe besonders gut berücksichtigt werden.

Ergänzend ist vorgesehen, dass die erste und/oder die zweite Kraftstoffpumpe und/oder die erste und/oder die zweite Hochdruck-Kraftstoffpumpe elektrisch angetrieben sind. Die Vorteile elektrischer Kraftstoffpumpen (bspw. individuelle und von einem aktuellen Betriebszustand einer Brennkraftmaschine unabhängige Förderleistung) können somit auch für die zweite Ausgestaltung der Erfindung genutzt werden.

Allgemein sieht die Erfindung ergänzend vor, dass ein Mengenverhältnis des ersten und des zweiten Kraftstoffs einstellbar ist. Beispielsweise beträgt das Verhältnis des ersten zu dem zweiten Kraftstoff - wie oben bereits beschrieben - zehn zu eins. Es ist jedoch auch ein beliebiges anderes Verhältnis möglich, welches sogar während des Betriebs der Brennkraftmaschine verändert werden kann. Man erkennt, dass bereits ein vergleichsweise kleiner Anteil des zweiten zu dem ersten Kraftstoff ausreicht, um eine optimale Verdampfung beider Kraftstoffe in dem Brennraum zu ermöglichen. Von dem zweiten Kraftstoff wird also vergleichsweise wenig benötigt, wodurch das erfindungsgemäße Kraftstoffsystem besonders effizient ist.

Weiterhin ist vorgesehen, dass die Mischeinrichtung mindestens ein Proportionalventil und/oder ein getaktetes Schaltventil und/oder ein getaktetes Umschaltventil und/oder eine Blende und/oder einen in einer stromabwärts angeordneten Hochdruck-Kraftstoffpumpe angeordneten Steuerschlitz umfasst. Damit werden verschiedene Ausführungsformen der Mischeinrichtung ermöglicht, welche somit optimal auf ein jeweiliges Kraftstoffsystem abgestimmt sein können. Das - schnell schaltende - Umschaltventil ermöglicht es beispielsweise, das Mischungsverhältnis der beiden Kraftstoffe während einer Ansaugphase der Hochdruck-Kraftstoffpumpe einzustellen. Die besagten Blenden sind insbesondere dann sinnvoll, wenn die Förderung der Kraftstoffe mittels jeweils einer Vorförderpumpe bei einem jeweils gleichen Kraftstoffdruck erfolgt. Der - mindestens eine - Steuerschlitz ist besonders sinnvoll bei einem gleichbleibenden Hub eines Kolbens der Hochdruck-Kraftstoffpumpe anwendbar. In einem Kraftstoffsystem entsprechend der beschriebenen dritten Ausgestaltung kann die Mischeinrichtung auch eine Vermischungseinrichtung, beispielsweise einen Quirl oder dergleichen umfassen.

Das erfindungsgemäße Kraftstoffsystem arbeitet besonders zuverlässig, wenn die erste bzw. zweite Kraftstoffpumpe und/oder die erste bzw. zweite Hochdruck-Kraftstoffpumpe einen jeweiligen Kraftstoffdruck erzeugen kann, welcher höher ist als der jeweilige Dampfdruck des geförderten Kraftstoffs. Dadurch können Gasblasen in dem Kraftstoffsystem verhindert und somit ein störungsfreier Betrieb erreicht werden.

Nachfolgend werden beispielhafte Ausführungsformen der Erfindung unter Bezugnahme auf die Zeichnung erläutert. In der Zeichnung zeigen:
- Figur 1: ein Kraftstoffsystem für eine Brennkraftmaschine in einer ersten Ausführungsform (Nicht erfindungsgemäß);
- Figur 2: das Kraftstoffsystem für die Brennkraftmaschine in einer erfindungsgemäßen Ausführungsform;
- Figur 3: das Kraftstoffsystem für die Brennkraftmaschine in einer dritten Ausführungsform (Nicht erfindungsgemäß);
- Figur 4: ein Diagramm mit einem Dampfdruck über einer Temperatur;
- Figur 5: eine schematische Darstellung eines Einspritzvorgangs in einem ersten Zustand;
- Figur 6: die schematische Darstellung des Einspritzvorgangs in einem zweiten Zustand;
- Figur 7: die schematische Darstellung des Einspritzvorgangs in einem dritten Zustand;
- Figur 8: ein Bild eines Einspritzvorgangs mit einem ersten Kraftstoff; und
- Figur 9: ein Bild eines Einspritzvorgangs mit dem ersten und einem zweiten Kraftstoff.

Es werden für funktionsäquivalente Elemente und Größen in allen Figuren auch bei unterschiedlichen Ausführungsformen die gleichen Bezugszeichen verwendet.

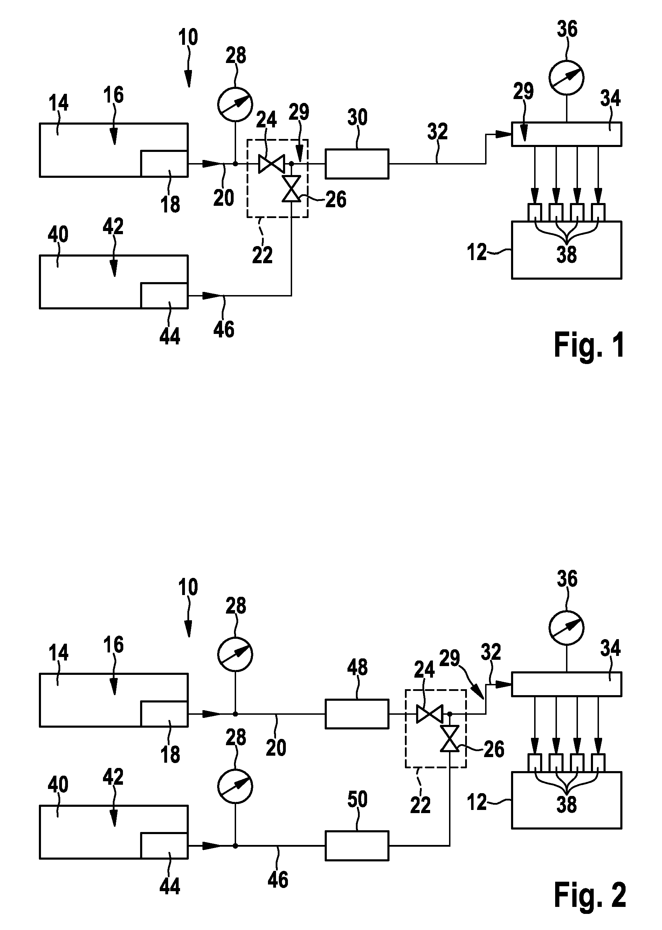

Figur 1 zeigt eine nicht erfindungsgemäße Ausführungsform eines Kraftstoffsystems 10 für eine Brennkraftmaschine 12 in einer vereinfachten Darstellung. In einem in der Zeichnung oberen linken Bereich ist ein erster Speicher 14 (Kraftstoffbehälter) für einen ersten Kraftstoff 16 dargestellt, welcher vorliegend Benzin ist. An bzw. in dem ersten Speicher 14 ist eine erste elektrisch angetriebene Kraftstoffpumpe 18 angeordnet, welche ausgangsseitig über eine erste Niederdruckleitung 20 mit einem ersten Eingang einer Mischeinrichtung 22 verbunden ist. Die Mischeinrichtung 22 umfasst ein erstes und ein zweites Proportionalventil 24 und 26. An der ersten Niederdruckleitung 20 ist ein erster Drucksensor 28 angeordnet. Stromabwärts wird ein in der Mischeinrichtung 22 gebildetes Gemisch 29 einem Saugbereich einer elektrisch angetriebenen Hochdruck-Kraftstoffpumpe 30 zugeführt.

Ausgangsseitig ist die elektrisch angetriebene Hochdruck-Kraftstoffpumpe 30 über eine Hochdruckleitung 32 mit einem Kraftstoff-Hochdruckspeicher 34 ("Rail") verbunden. An dem Hochdruckspeicher 34 ist ein zweiter Drucksensor 36 angeordnet, mittels welchem ein aktueller Kraftstoffdruck in dem Hochdruckspeicher 34 ermittelt werden kann. Der Hochdruckspeicher 34 ist über Kraftstoffleitungen (ohne Bezugszeichen) mit vorliegend vier Injektoren 38 (Einspritzventilen) der Brennkraftmaschine 12 hydraulisch verbunden.

Im in der Zeichnung unteren linken Bereich ist ein zweiter Speicher 40 (Kraftstoffbehälter) für einen zweiten Kraftstoff 42 dargestellt, welcher vorliegend Flüssiggas ist. An bzw. in dem zweiten Speicher 40 ist eine zweite elektrisch angetriebene Kraftstoffpumpe 44 angeordnet, welche ausgangsseitig über eine zweite Niederdruckleitung 46 mit einem zweiten Eingang der Mischeinrichtung 22 verbunden ist.

Alternativ zu den Proportionalventilen 24 und 26 kann die Mischeinrichtung 22 auch ein getaktetes Schaltventil, ein schnelles Umschaltventil oder - insbesondere bei einem gleichen ersten Förderdruck ("Vorförderdruck") der Kraftstoffpumpen 18 und 44 - eine Blende umfassen. Die Proportionalventile 24 und 26 bzw. die Blenden bestimmen durch ein definiertes Verhältnis des Produkts von Öffnungsquerschnitt und erstem Förderdruck das Mischungsverhältnis. Zur Erhöhung der Genauigkeit kann jeweils stromaufwärts der Proportionalventile 24 und 26 - bzw. der alternativen Blenden - ein hydraulischer Druckdämpfer angeordnet sein. Das besagte schnelle Umschaltventil ist besonders sinnvoll bei einer mit einem Kolben ausgeführten Hochdruck-Kraftstoffpumpe 30 anwendbar und ermöglicht die Einstellung des Mischungsverhältnisses während der Ansaugphase. Ebenso kann die Mischeinrichtung 22 einen Steuerschlitz in der Hochdruck-Kraftstoffpumpe 30 umfassen, was besonders sinnvoll ist, wenn die Hochdruck-Kraftstoffpumpe 30 einen konstanten Hub aufweist.

Im Betrieb der Brennkraftmaschine 12 fördert die erste elektrisch angetriebene Kraftstoffpumpe 18 Benzin aus dem ersten Speicher 14 über die erste Niederdruckleitung 20 in die Mischeinrichtung 22, wobei ein hydraulischer Druck des Benzins auf einen ersten Förderdruck - beispielsweise bis zu 21 bar - erhöht wird. Der erste Förderdruck wird mittels des ersten Drucksensors 28 ermittelt bzw. überwacht. Das Proportionalventil 24 der Mischeinrichtung 22 steuert die der elektrisch angetriebenen Hochdruck-Kraftstoffpumpe 30 zugeführte Benzinmenge.

Die zweite elektrisch angetriebene Kraftstoffpumpe 44 fördert Flüssiggas aus dem Speicher 40 über die zweite Niederdruckleitung 46 ebenfalls in die Mischeinrichtung 22, wobei ein hydraulischer Druck des Flüssiggases ebenfalls auf einen ersten Förderdruck - beispielsweise bis zu 21 bar - erhöht wird. Das Proportionalventil 26 der Mischeinrichtung 22 steuert die der elektrisch angetriebenen Hochdruck-Kraftstoffpumpe 30 zugeführte Flüssiggasmenge. Dabei erfolgt die Steuerung der Mischeinrichtung 22 durch eine in der Zeichnung nicht dargestellte Steuer- und/oder Regeleinrichtung der Brennkraftmaschine 12, welche Signale von verschiedenen Sensoren, beispielsweise den Drucksensoren 28 und 36 erhält.

Die elektrisch angetriebene Hochdruck-Kraftstoffpumpe 30 fördert das in der Mischeinrichtung 22 gebildete Gemisch 29 aus Benzin und Flüssiggas mit einem zweiten - höheren - Förderdruck in die Hochdruckleitung 32 und danach in den Hochdruckspeicher 34. Die Mischeinrichtung 22 ist vorliegend so eingestellt, dass ein Mengenverhältnis des ersten Kraftstoffs 16 zu dem zweiten Kraftstoff 42 zehn zu eins beträgt, so dass die Brennkraftmaschine 12 im Wesentlichen mit Benzin betrieben wird. Aus dem Hochdruckspeicher 34 kann das Gemisch 29 über einen jeweiligen Injektor 38 in einen Brennraum der Brennkraftmaschine 12 eingespritzt werden.

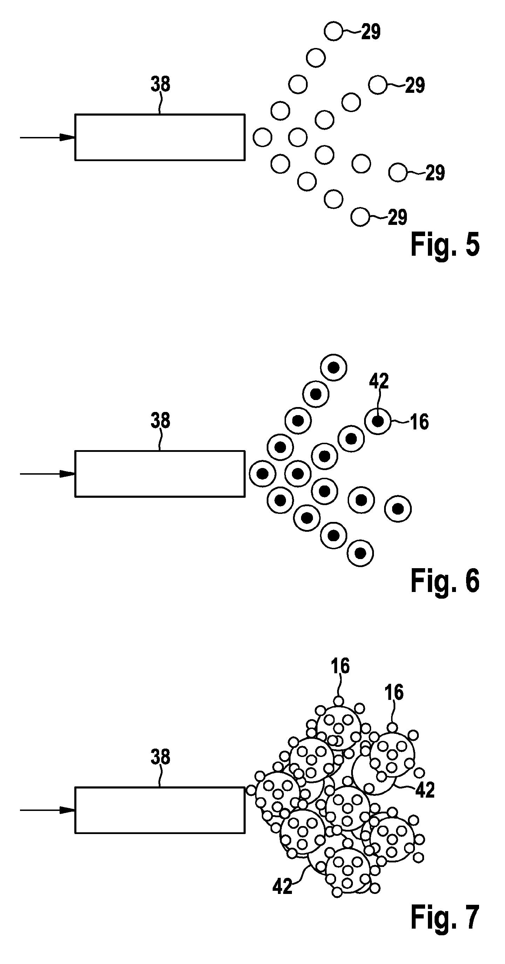

Mittels des in der Mischeinrichtung 22 gebildeten Gemisches 29 kann die Verbrennung in dem Brennraum besonders gut erfolgen, wie weiter unten mittels der Figuren 5 bis 9 noch erläutert werden wird. Dabei kann ein Verhältnis der Stoffmengen von Benzin zu Flüssiggas auch während des Betriebs entsprechend einem jeweiligen Bedarf bzw. Betriebszustand der Brennkraftmaschine 12 gesteuert werden. Zusammen mit einem jeweils ausreichend hohen ersten und zweiten Förderdruck wird erreicht, dass ein Dampfdruck des Flüssiggases bzw. des Benzins in dem Kraftstoffsystem 10 nicht unterschritten wird. Somit bleibt auch das Gemisch 29 auf dem Weg von den Speichern 14 und 40 bis zur Einspritzung mittels der Injektoren 38 in einem flüssigen Zustand, wobei eine Entmischung im Wesentlichen verhindert wird.

Das Flüssiggas kann beispielsweise Butan oder Propan sein oder ein beliebiges Verhältnis von Butan zu Propan aufweisen, sofern ein Dampfdruck der Mischung über dem Dampfdruck des Benzins liegt.

Figur 2 zeigt die erfindungsgemäße Ausführungsform des Kraftstoffsystems 10 für die Brennkraftmaschine 12. Dabei ist die erste Kraftstoffpumpe 18 über die erste Niederdruckleitung 20 mit einem Saugbereich einer ersten Hochdruck-Kraftstoffpumpe 48 verbunden und die zweite Kraftstoffpumpe 44 ist über die zweite Niederdruckleitung 46 mit einem Saugbereich einer zweiten Hochdruck-Kraftstoffpumpe 50 verbunden. Die erste bzw. die zweite Hochdruck-Kraftstoffpumpe 48 bzw. 50 können elektrisch oder mechanisch angetrieben sein. Eventuelle Einrichtungen zur Steuerung eines Fördervolumens - wie beispielsweise ein Mengensteuerventil in dem Saugbereich der Hochdruck-Kraftstoffpumpe 48 bzw. 50 - im Fall eines mechanischen Antriebs der Hochdruck-Kraftstoffpumpen 48 und 50 sind in der Zeichnung nicht dargestellt.

Ausgangsseitig sind die Hochdruck-Kraftstoffpumpen 48 und 50 jeweils mit den Proportionalventilen 24 und 26 der Mischeinrichtung 22 verbunden. An einen Ausgang der Mischeinrichtung 22 ist die Hochdruckleitung 32 angeschlossen, welche wie bei der Figur 1 beschrieben mit dem Hochdruckspeicher 34 verbunden ist.

Alternativ zu den Proportionalventilen 24 und 26 kann - wie bereits bei der Figur 1 näher erläutert - die Mischeinrichtung 22 auch ein getaktetes Schaltventil, ein schnelles Umschaltventil und/oder eine Blende umfassen. Ebenso kann die Mischeinrichtung 22 einen Steuerschlitz in der Hochdruck-Kraftstoffpumpe 48 bzw. 50 umfassen.

Im Betrieb der Brennkraftmaschine 12 fördert die erste elektrisch angetriebene Kraftstoffpumpe 18 Benzin aus dem ersten Speicher 14 über die erste Niederdruckleitung 20 mit einem ersten Förderdruck von beispielsweise bis zu 10 bar zu der Hochdruck-Kraftstoffpumpe 48. Die zweite elektrisch angetriebene Kraftstoffpumpe 44 fördert Flüssiggas aus dem zweiten Speicher 40 über die zweite Niederdruckleitung 46 mit einem ersten Förderdruck von beispielsweise bis zu 21 bar zu der Hochdruck-Kraftstoffpumpe 50. Die Hochdruck-Kraftstoffpumpen 48 und 50 erhöhen den Kraftstoffdruck jeweils auf einen zweiten Förderdruck. Die Proportionalventile 24 und 26 der Mischeinrichtung 22 steuern das Verhältnis der Stoffmengen von Benzin und Flüssiggas. Das derart gebildete Gemisch 29 wird nachfolgend der Hochdruckleitung 32 zugeführt.

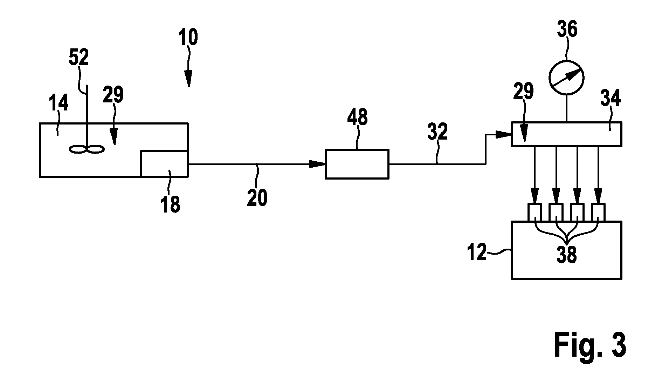

Figur 3 zeigt eine nicht erfindungsgemäße Ausführungsform des Kraftstoffsystems 10 für die Brennkraftmaschine 12. Im in der Zeichnung linken Bereich ist der Speicher 14 angeordnet, welcher vorliegend für den ersten und den zweiten Kraftstoff 16 und 42 gemeinsam ist und somit das Gemisch 29 aus Benzin und Flüssiggas bereits enthält. Das Gemisch 29 kann vorzugsweise schon an einer Tankstelle fertig gemischt in den Speicher 14 eingefüllt werden. Ergänzend weist der Speicher 14 eine Vermischungseinrichtung in Form eines Quirls 52 auf.

Die erste Kraftstoffpumpe 18 ist über die erste Niederdruckleitung 20 mit dem Saugbereich der Hochdruck-Kraftstoffpumpe 48 verbunden. Dabei kann die Hochdruck-Kraftstoffpumpe 48 elektrisch oder mechanisch angetrieben sein. Ausgangsseitig ist die Hochdruck-Kraftstoffpumpe 48 wie oben bereits beschrieben mit der Hochdruckleitung 32 verbunden.

Im Betrieb des Kraftstoffsystems 10 wird das Gemisch 29 aus dem Speicher 14 über die Niederdruckleitung 20 dem Saugbereich der Hochdruck-Kraftstoffpumpe 48 zugeführt. Dabei verhindert der zumindest zeitweise betätigte Quirl 52 eine Entmischung der beiden Kraftstoffe. Die Hochdruck-Kraftstoffpumpe 48 fördert das Gemisch 29 wie oben bereits beschrieben in die Hochdruckleitung 32. Ebenso wie in den Ausführungsformen nach den Figuren 1 und 2 wird durch einen ausreichenden ersten und zweiten Förderdruck erreicht, dass ein Dampfdruck des Gemisches 29 nicht unterschritten wird. Somit bleibt das Gemisch 29 auf dem Weg von dem Speicher 14 bis zu den Austrittsöffnungen der Injektoren 38 in einem flüssigen Zustand.

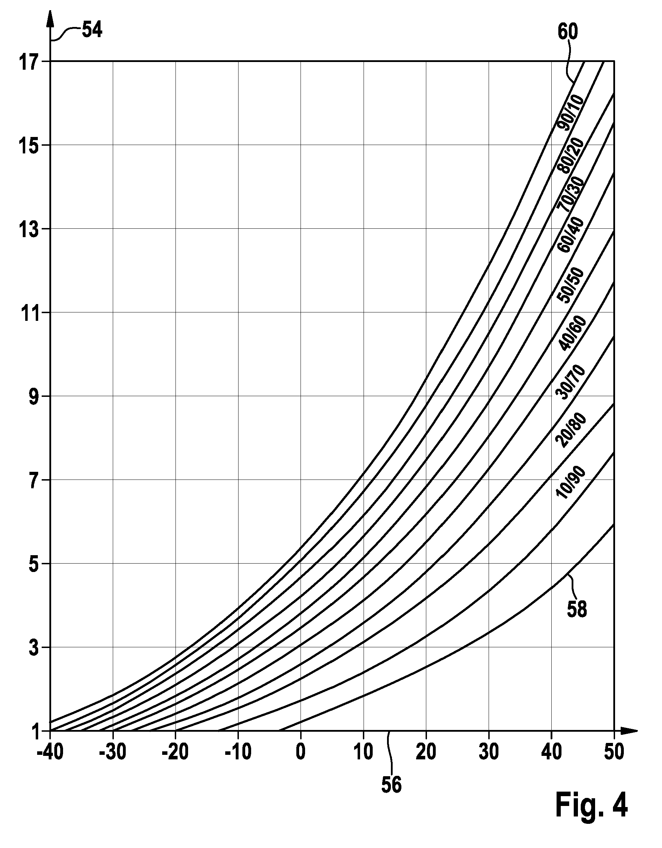

Figur 4 zeigt ein Diagramm mit einem Dampfdruck 54 des zweiten Kraftstoffs 42 über einer Temperatur 56. Auf der Abszisse des dargestellten Koordinatensystems ist die Temperatur 56 des zweiten Kraftstoffs 42 (Flüssiggas) aufgetragen. Auf der Ordinate ist der Dampfdruck 54 des Flüssiggases in Abhängigkeit von der Temperatur 56 in einer jeweiligen Zusammensetzung aufgetragen. Dargestellt ist in der Zeichnung also eine Kurvenschar, welche die jeweilige Zusammensetzung des Flüssiggases als Parameter aufweist. Die Einheit der Temperatur 56 ist "°C" (Grad Celsius) und die Einheit des Dampfdrucks 54 ist "bar".

Eine in der Zeichnung unterste Kurve 58 entspricht einem Butangas, welches vorliegend zu 70 Gewichtsprozenten ein n-Butan und zu 30 Gewichtsprozenten ein i-Butan aufweist. Eine in der Zeichnung oberste Kurve 60 entspricht einem Propangas, welches vorliegend zu 96 Gewichtsprozenten ein reines Propan, zu 2,5 Gewichtsprozenten ein Äthan und zu 1,5 Gewichtsprozenten ein i-Butan aufweist. Die Parameterangaben zu den übrigen Kurven bedeuten jeweils einen prozentualen Anteil von Butangas und einen prozentualen Anteil von Propangas.

Man erkennt, dass der Dampfdruck 54 - also jener spezifische Umgebungsdruck, unterhalb dessen das Flüssiggas in die gasförmige Phase übergeht - mit steigender Temperatur 56 ebenfalls steigt. Weiterhin steigt der jeweilige Dampfdruck 54 mit zunehmendem Propananteil an. Ein hoher Anteil von Butan kann somit - bei ansonsten gleichen Bedingungen - die Gefahr der Bildung von Gasblasen vermindern.

Figur 5 zeigt eine schematische Darstellung eines Einspritzvorgangs mittels des Injektors 38 in einem ersten Zustand. Der im linken Bereich der Zeichnung angeordnete Injektor 38 spritzt das Gemisch 29 in der Zeichnung nach rechts in den nicht näher dargestellten Brennraum der Brennkraftmaschine 12 ein. In dem gezeigten Zustand sind erste Tröpfchen des Gemisches 29 bereits in den Brennraum eingespritzt, wobei das Gemisch 29 jedoch im Wesentlichen noch die flüssige Phase aufweist.

Figur 6 zeigt die Anordnung der Figur 5 in einem zweiten, auf den ersten folgenden Zustand. Die dargestellten jeweiligen inneren Punkte bzw. Kreise bedeuten den zweiten Kraftstoff 42 (Flüssiggas) und die jeweiligen größeren äußeren Kreise bedeuten den ersten Kraftstoff 16 (Benzin). Im gezeigten Zustand der Verdampfung beginnt das Flüssiggas nach dem Austritt aus dem Injektor 38 aufgrund des beim Austritt erfolgenden Druckabfalls sehr schnell in die gasförmige Phase überzugehen, wobei das Volumen ebenfalls sehr schnell größer wird.

Figur 7 zeigt die Anordnung der Figur 6 in einem dritten, auf den zweiten folgenden Zustand. Darin hat das Flüssiggas nahezu vollständig die gasförmige Phase angenommen. Wegen der - vorausgesetzt guten - Vermischung des Benzins und des Flüssiggases in dem Gemisch 29 ergibt sich der Effekt (so genannter "flash boiling effect"), dass das Benzin dabei in sehr viele und sehr kleine Einzeltröpfchen zerstäubt wird. Entsprechend schnell kann nachfolgend die Verdampfung des Benzins erfolgen, welches vorliegend zu etwa 90 Prozent zum Gemisch 29 beiträgt. Daraus ergibt sich eine besonders rasche und wirksame Verbrennung des Gemisches 29 bzw. des Benzins in dem Brennraum. Das Flüssiggas verbrennt ebenfalls und trägt somit zur Momentenbildung der Brennkraftmaschine 12 bei.

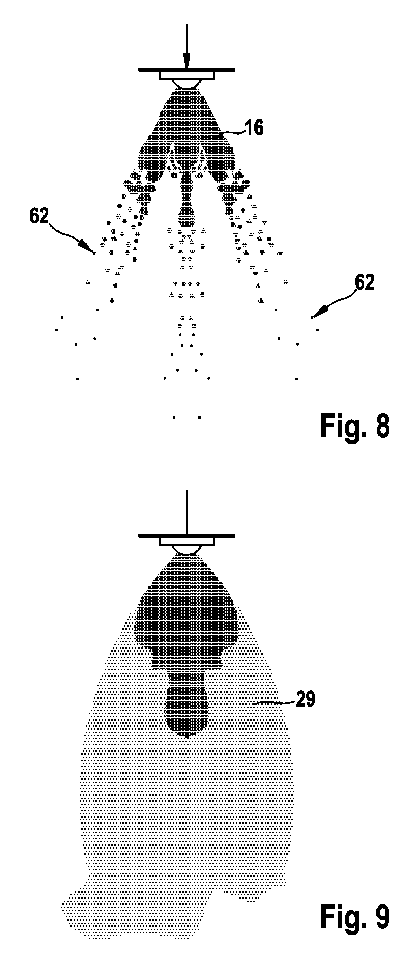

Figur 8 zeigt ein (gezeichnetes) Bild einer Einspritzung, welche nur mit dem ersten Kraftstoff 16, also mit Benzin, erfolgt. Die Einspritzung erfolgt in der Zeichnung im Wesentlichen von oben nach unten, wobei der Injektor 38 nicht mit dargestellt ist. Das gezeigte Bild entstand bei einem Einspritzdruck von in etwa 10 bar und einer Einspritzdauer von in etwa 2 ms (Millisekunden). Deutlich sind vergleichsweise große Einzeltröpfchen 62 des Benzins zu erkennen.

Figur 9 zeigt eine zu der Figur 8 vergleichbare Einspritzung, welche jedoch mit dem Gemisch 29, also mit in etwa 90 Prozent Benzin und in etwa 10 Prozent Flüssiggas erfolgt. Das gezeigte Bild entstand ebenfalls bei einem Einspritzdruck von in etwa 10 bar und einer Einspritzdauer von in etwa 2 ms.

Man erkennt deutlich, wie die Einspritzung der Figur 9 im Vergleich zu der Figur 8 einen großvolumigen Sprühnebel bildet, wobei Einzeltröpfchen im vorliegenden Maßstab der Zeichnung nicht oder kaum sichtbar sind. Die in der Figur 9 sichtbare Feinstruktur ergibt sich im Wesentlichen aus einem Raster des Bildes bzw. der Zeichnung.

## Patentansprüche

1. Kraftstoffsystem (10), aufweisend:
einen ersten Speicher (14) für einen ersten in flüssiger Phase befindlichen Kraftstoff (16) mit einem ersten Dampfdruck und einen zweiten Speicher (40) für einen zweiten in flüssiger Phase befindlichen Kraftstoff (42) mit einem zweiten Dampfdruck (54), wobei der zweite Dampfdruck (54) höher ist als der erste Dampfdruck; eine Mischeinrichtung (22) zum Mischen des ersten in flüssiger Phase befindlichen Kraftstoffs (16) mit dem zweiten in flüssiger Phase befindlichen Kraftstoff (42); und einen Injektor (38), der mit der Mischeinrichtung (22) hydraulisch verbunden und so ausgebildet ist, dass beim bzw. unmittelbar nach dem Durchtritt des Gemisches (29) durch eine Austrittsöffnung des Injektors (38) der zweite Kraftstoff (42) von der flüssigen in die gasförmige Phase übergeht, **dadurch gekennzeichnet, dass** in einem Bereich des ersten bzw. zweiten Speichers (14, 40) jeweils eine erste bzw. zweite Kraftstoffpumpe (18, 44) angeordnet ist, und dass ein Druckbereich der ersten Kraftstoffpumpe (18) mit einem Saugbereich einer ersten Hochdruck-Kraftstoffpumpe (48) verbunden ist, und dass ein Druckbereich der zweiten Kraftstoffpumpe (44) mit einem Saugbereich einer zweiten Hochdruck-Kraftstoffpumpe (50) verbunden ist, und dass der Druckbereich der ersten Hochdruck-Kraftstoffpumpe (48) und der Druckbereich der zweiten Hochdruck-Kraftstoffpumpe (50) mit der Mischeinrichtung (22) verbunden sind, und dass die Mischeinrichtung (22) stromabwärts mit einem Druckspeicher (34) verbunden ist, aus welchem das Gemisch (29) dem Injektor (38) zugeführt werden kann.

2. Kraftstoffsystem (10) nach Anspruch 1, **dadurch gekennzeichnet, dass** der erste Kraftstoff (16) Benzinkraftstoff oder Dieselkraftstoff und der zweite Kraftstoff (42) Flüssiggas ist.

3. Kraftstoffsystem (10) nach Anspruch 1 oder 2, **dadurch gekennzeichnet, dass** die erste und/oder die zweite Kraftstoffpumpe (18, 44) und/oder die erste und/oder die zweite Hochdruck-Kraftstoffpumpe (48, 50) elektrisch angetrieben sind.

4. Kraftstoffsystem (10) nach wenigstens einem der vorhergehenden Ansprüche, **dadurch gekennzeichnet, dass** ein Mengenverhältnis des ersten zum zweiten Kraftstoff (16, 42) einstellbar ist.

5. Kraftstoffsystem (10) nach wenigstens einem der vorhergehenden Ansprüche, **dadurch gekennzeichnet, dass** die Mischeinrichtung (22) mindestens ein Proportionalventil (24, 26) und/oder ein getaktetes Schaltventil und/oder ein getaktetes Umschaltventil und/oder eine Blende und/oder einen in einer stromabwärts angeordneten Hochdruck-Kraftstoffpumpe (30) angeordneten Steuerschlitz umfasst.

6. Kraftstoffsystem (10) nach einem der Ansprüche 1 bis 5, **dadurch gekennzeichnet, dass** die erste bzw. zweite Kraftstoffpumpe (18, 44) und/oder die erste bzw. zweite Hochdruck-Kraftstoffpumpe (30; 48, 50) einen jeweiligen Kraftstoffdruck erzeugen kann, welcher höher ist als der jeweilige Dampfdruck des geförderten Kraftstoffs (16, 42).

## Claims

1. Fuel system (10), having: a first accumulator (14) for a first fuel (16), which is present in the liquid phase and which has a first vapor pressure, and a second accumulator (40) for a second fuel (42), which is present in the liquid phase and which has a second vapor pressure (54), wherein the second vapor pressure (54) is higher than the first vapor pressure; a mixing device (22) for mixing the first fuel (16), which is present in the liquid phase, with the second fuel (42), which is present in the liquid phase; and an injector (38) which is hydraulically connected to the mixing device (22) and which is designed such that, as or directly after the mixture (29) passes through an outlet opening of the injector (38), the second fuel (42) changes from the liquid phase into the gaseous phase, **characterized in that** in each case one first and second fuel pump (18, 44) is arranged in a region of the first and second accumulator (14, 40) respectively, and **in that** a pressure region of the first fuel pump (18) is connected to a suction region of a first high-pressure fuel pump (48), and **in that** a pressure region of the second fuel pump (44) is connected to a suction region of a second high-pressure fuel pump (50), and **in that** the pressure region of the first high-pressure fuel pump (48) and the pressure region of the second high-pressure fuel pump (50) are connected to the mixing device (22), and **in that** the mixing device (22) is connected, downstream, to a pressure accumulator (34) from which the mixture (29) can be fed to the injector (38).

2. Fuel system (10) according to Claim 1, **characterized in that** the first fuel (16) is gasoline fuel or diesel fuel, and the second fuel (42) is liquefied gas.

3. Fuel system (10) according to Claim 1 or 2, **characterized in that** the first and/or the second fuel pump (18, 44) and/or the first and/or the second high-pressure fuel pump (48, 50) are electrically driven.

4. Fuel system (10) according to at least one of the preceding claims, **characterized in that** a flow rate ratio of the first fuel (16) with respect to the second fuel (42) is adjustable.

5. Fuel system (10) according to at least one of the preceding claims, **characterized in that** the mixing device (22) comprises at least one proportional valve (24, 26) and/or a cyclically operating switching valve and/or a cyclically operating switchover valve and/or an aperture and/or a control slot arranged in a high-pressure fuel pump (30) arranged downstream.

6. Fuel system (10) according to one of Claims 1 to 5, **characterized in that** the first and second fuel pump (18, 44), respectively, and/or the first and second high-pressure fuel pump (30; 48, 50), respectively, can generate a respective fuel pressure that is higher than the respective vapor pressure of the delivered fuel (16, 42).

## Revendications

1. Système de carburant (10), présentant :
un premier réservoir (14) pour un premier carburant (16) en phase liquide à une première pression de vapeur et un deuxième réservoir (40) pour un deuxième carburant (42) en phase liquide à une deuxième pression de vapeur (54), la deuxième pression de vapeur (54) étant supérieure à la première pression de vapeur ; un dispositif de mélange (22) pour mélanger le premier carburant (16) en phase liquide avec le deuxième carburant (42) en phase liquide ; et un injecteur (38), qui est connecté hydrauliquement au dispositif de mélange (22) et qui est réalisé de telle sorte qu'au passage ou immédiatement après le passage du mélange (29) à travers une ouverture de sortie de l'injecteur (38), le deuxième carburant (42) passe de la phase liquide à la phase gazeuse, **caractérisé en ce que** dans une région du premier, respectivement du deuxième réservoir (14, 40) est disposée à chaque fois une première, respectivement une deuxième pompe à carburant (18, 44), et **en ce qu'**une région de pression de la première pompe à carburant (18) est connectée à une région d'aspiration d'une première pompe à carburant haute pression (48), et **en ce qu'**une région de pression de la deuxième pompe à carburant (44) est connectée à une région d'aspiration d'une deuxième pompe à carburant haute pression (50), et **en ce que** la région de pression de la première pompe à carburant haute pression (48) et la région de pression de la deuxième pompe à carburant haute pression (50) sont connectées au dispositif de mélange (22) et **en ce que** le dispositif de mélange (22) est connecté en aval à un accumulateur de pression (34) depuis lequel le mélange (29) peut être acheminé à l'injecteur (38).

2. Système de carburant (10) selon la revendication 1, **caractérisé en ce que** le premier carburant (16) est de l'essence ou du diesel et le deuxième carburant (42) est un gaz liquéfié.

3. Système de carburant (10) selon la revendication 1 ou 2, **caractérisé en ce que** la première et/ou la deuxième pompe à carburant (18, 44) et/ou la première et/ou la deuxième pompe à carburant haute pression (48, 50) sont entraînées électriquement.

4. Système de carburant (10) selon au moins l'une quelconque des revendications précédentes, **caractérisé en ce qu'**un rapport quantitatif du premier au deuxième carburant (16, 42) peut être ajusté.

5. Système de carburant (10) selon au moins l'une quelconque des revendications précédentes, **caractérisé en ce que** le dispositif de mélange (22) comprend au moins une soupape proportionnelle (24, 26) et/ou une soupape de commutation temporisée et/ou une soupape d'inversion temporisée et/ou un diaphragme et/ou une fente de commande disposée dans une pompe à carburant haute pression disposée en aval (30).

6. Système de carburant (10) selon l'une quelconque des revendications 1 à 5, **caractérisé en ce que** la première, respectivement la deuxième pompe à carburant (18, 44) et/ou la première, respectivement la deuxième pompe à carburant haute pression (30 ; 48, 50) peut produire une pression de carburant respective qui est supérieure à la pression de vapeur respective du carburant refoulé (16, 42).
